# EUROPEAN PATENT SPECIFICATION

(11) **EP 4 440 086 B1**
(45) Date of publication and mention of the grant of the patent: **19.11.2025**
(21) Application number: 22897737.7
(22) Date of filing: 21.11.2022
(51) Int. Cl.: G06F 1/16, H04M 1/02

(54) **FOLDABLE SUPPORTING APPARATUS AND ELECTRONIC DEVICE**
FALTBARE STÜTZVORRICHTUNG UND ELEKTRONISCHE VORRICHTUNG
APPAREIL DE SUPPORT PLIABLE ET DISPOSITIF ÉLECTRONIQUE

(30) Priority: 26.11.2021 CN 202111427824
(43) Date of publication of application: 02.10.2024
(73) Proprietor: Vivo Mobile Communication Co., Ltd., Dongguan, Guangdong 523863 (CN)
(72) Inventor: YANG, Zuokun, Dongguan, Guangdong 523863 (CN)
(74) Representative: Lavoix
(86) International application number: PCT/CN2022/133083
(87) International publication number: WO 2023/093654

(56) References cited:
- EP-A1- 3 809 678
- WO-A1-2021/197289
- CN-A- 113 067 924
- CN-A- 114 125 109
- CN-U- 209 731 313
- US-A1- 2021 333 838

## Description

### TECHNICAL FIELD

This application relates to the field of communication device technologies, and specifically, to a foldable supporting apparatus, and an electronic device.

### BACKGROUND

With the advancement of technologies, electronic devices with relatively large display areas are increasingly favored by users. However, the increase in display areas results in poor portability of the electronic devices. In order to meet requirements of both large-screen display and portability, foldable electronic devices have become a new development trend. However, in the related art, due to the difference in the distance between two ends of the screen in a folded state and an unfolded state, the bending process causes relatively large internal stress of the screen, which causes the screen to be easily damaged and reduces the structural stability of the foldable electronic device. US 2021/333838 A1 discloses a foldable display device in which a first body and a second body of an electronic device having a folded display are rotatably connected to each other so that a rotation angle between the first and second bodies is efficiently set.

### SUMMARY

An objective of embodiments of this application is to provide a foldable supporting apparatus and an electronic device, to resolve the problem in the related art that the bending process causes relatively large internal stress of the screen, which causes the screen to be easily damaged.

According to a first aspect, an embodiment of this application discloses a foldable supporting apparatus, including a mounting base, a rotating shaft, a telescopic assembly, a pushing assembly, and a base, where the mounting base is rotatably connected to the rotating shaft, and the mounting base and the rotating shaft are relatively fixed in an axial direction of the rotating shaft; and the pushing assembly and the rotating shaft are relatively fixed in a circumferential direction of the rotating shaft, and the pushing assembly and the rotating shaft are movably matched in the axial direction;

the telescopic assembly is arranged between the mounting base and the pushing assembly in the axial direction of the rotating shaft, the telescopic assembly includes a rotating member and a push-pull member, and the rotating member is in transmission connection with the rotating shaft; in the axial direction of the rotating shaft, one of the rotating member and the push-pull member is relatively fixed to the mounting base, and the other thereof is relatively fixed to the pushing assembly; and one of the rotating member and the push-pull member is provided with a sliding groove, and the other thereof is provided with a slider, where the slider switches between a first position and a second position along the sliding groove in a reciprocating manner, to change a distance between the mounting base and the pushing assembly in the axial direction; and

the base is configured to support a display screen, the base is connected to an end of the pushing assembly facing away from the rotating shaft, and the pushing assembly is provided with a first inclined pushing surface, where the first inclined pushing surface is configured to change a distance between the base and the rotating shaft in a radial direction of the rotating shaft in a reciprocating manner in a case that the pushing assembly reciprocates in the axial direction of the rotating shaft.

According to a second aspect, an embodiment of this application further discloses an electronic device, including a flexible screen and the foregoing foldable supporting apparatus, where two opposite ends of the flexible screen are both fixed to the foldable supporting apparatus.

The embodiments of this application disclose a foldable supporting apparatus and an electronic device. The foldable supporting apparatus includes a mounting base, a rotating shaft, a telescopic assembly, a pushing assembly, and a base, where the mounting base is rotatably connected to the rotating shaft, and the mounting base and the rotating shaft are relatively fixed in an axial direction of the rotating shaft. The pushing assembly is connected to the mounting base through the telescopic assembly, one of a rotating member and a push-pull member of the telescopic assembly is provided with a sliding groove, and the other thereof is provided with a slider, where the slider can switch between a first position and a second position of the sliding groove in a reciprocating manner, to change a distance between the mounting base and the pushing assembly in the axial direction of the rotating shaft. In addition, the base is further connected to an end of the pushing assembly facing away from the rotating shaft, and the pushing assembly is provided with a first inclined pushing surface. Under the action of the first inclined pushing surface, a distance between the base and the rotating shaft in a radial direction of the rotating shaft can be changed when the pushing assembly moves relative to the rotating shaft in the axial direction of the rotating shaft. The foldable supporting apparatus provided in this application can be applied to a foldable screen. By changing the distance between the base and the rotating shaft in a folding process and an unfolding process, a difference in a distance between two ends of the screen in a folded state and an unfolded state can be compensated for, thereby preventing the screen from generating large internal stress and improving the stability of the foldable electronic device.

### BRIEF DESCRIPTION OF THE DRAWINGS

The accompanying drawings described herein are used for providing further understanding for this application and constitute a part of this application. Exemplary embodiments of this application and descriptions thereof are used for explaining this application and do not constitute an improper limitation to this application. In the accompanying drawings:
FIG. 1 is a schematic diagram of a partial structure in a foldable supporting apparatus according to an embodiment of this application;
FIG. 2 is a schematic exploded view of a partial structure in a foldable supporting apparatus according to an embodiment of this application;
FIG. 3 is a schematic exploded view of a telescopic assembly in a foldable supporting apparatus according to an embodiment of this application;
FIG. 4 is a schematic structural diagram of a telescopic assembly in a foldable supporting apparatus in a state according to an embodiment of this application;
FIG. 5 is a schematic structural diagram of a telescopic assembly in a foldable supporting apparatus in another state according to an embodiment of this application;
FIG. 6 is a schematic cross-sectional view of a partial structure in a pushing assembly in a foldable supporting apparatus according to an embodiment of this application;
FIG. 7 is a schematic cross-sectional view of a partial structure in a pushing assembly in a foldable supporting apparatus at another position according to an embodiment of this application;
FIG. 8 is a schematic structural diagram of an electronic device according to an embodiment of this application;
FIG. 9 is a schematic structural diagram of an electronic device in a state according to an embodiment of this application;
FIG. 10 is a schematic structural diagram of an electronic device in another state according to an embodiment of this application;
FIG. 11 shows movements of components when an electronic device switches from an unfolded state to a folded state according to an embodiment of this application; and
FIG. 12 shows movements of components when an electronic device switches from a folded state to an unfolded state according to an embodiment of this application.

Description of Reference Numerals:
100-mounting base, 110-mounting hole, 120-shaft hole;
200-telescopic assembly, 210-rotating member, 211-sliding groove, 220-push-pull member, 230-slider, 240-gear;
300-rotating shaft;
410-synchronizing member, 412-meshing tooth, 430-dovetail block;
510-sliding portion, 511-accommodating groove, 51la-first inclined pushing surface, 512-limiting groove, 520-driving portion, 521-insertion block, 521a-second inclined pushing surface, 522-limiting block, 530-guiding portion, 540-threaded connecting member;
610-bridge member, 611-arc-shaped through hole, 620-connecting member, 630-fixing base, 640-bolt;
710-base;
900-flexible screen.

### DETAILED DESCRIPTION

The following clearly describes the technical solutions in the embodiments of this application with reference to the accompanying drawings in the embodiments of this application. Apparently, the described embodiments are some rather than all of the embodiments of this application. All other embodiments obtained by a person of ordinary skill in the art based on the embodiments of this application without creative efforts shall fall within the protection scope of this application.

The terms such as "first" and "second" in the specification and the claims of this application are intended to distinguish between similar objects, but are not used for describing a specific sequence or a chronological order. It is to be understood that the data termed in such a way are interchangeable in appropriate circumstances, so that the embodiments of this application can be implemented in orders other than the order illustrated or described herein. In addition, the objects distinguished by "first", "second" and the like are generally of one type, and the quantity of the objects is not limited. For example, there may be one or more first objects. In addition, "and/or" used in the specification and the claims represents at least one of the connected objects, and the character "/" generally indicates an "or" relationship between the associated objects.

A foldable supporting apparatus and an electronic device provided in the embodiments of this application are described in detail below with reference to the accompanying drawings by using specific embodiments and application scenarios of the specific embodiments.

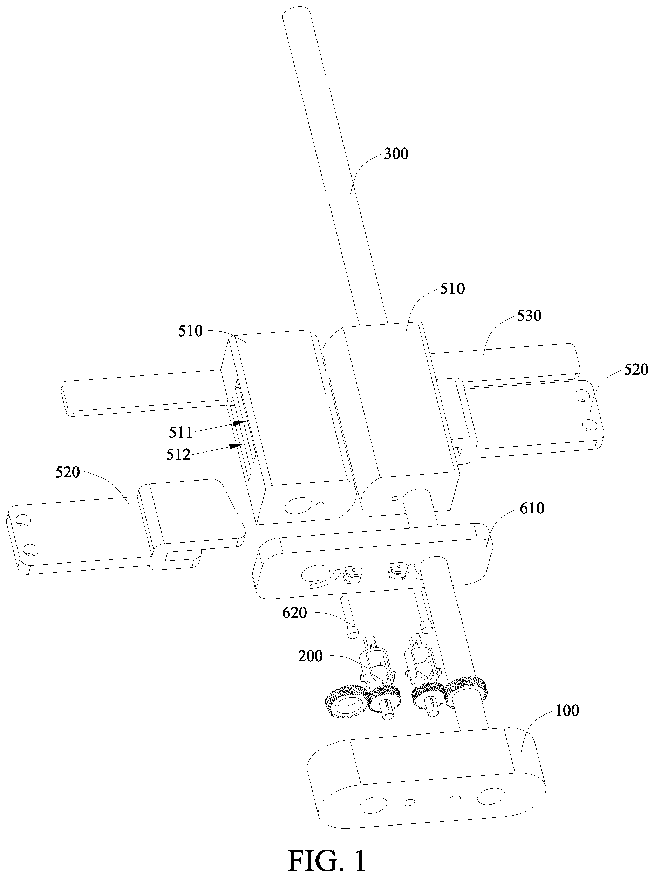

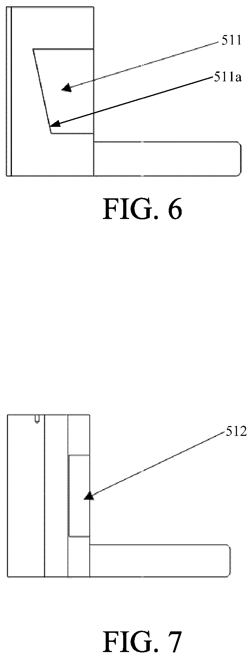

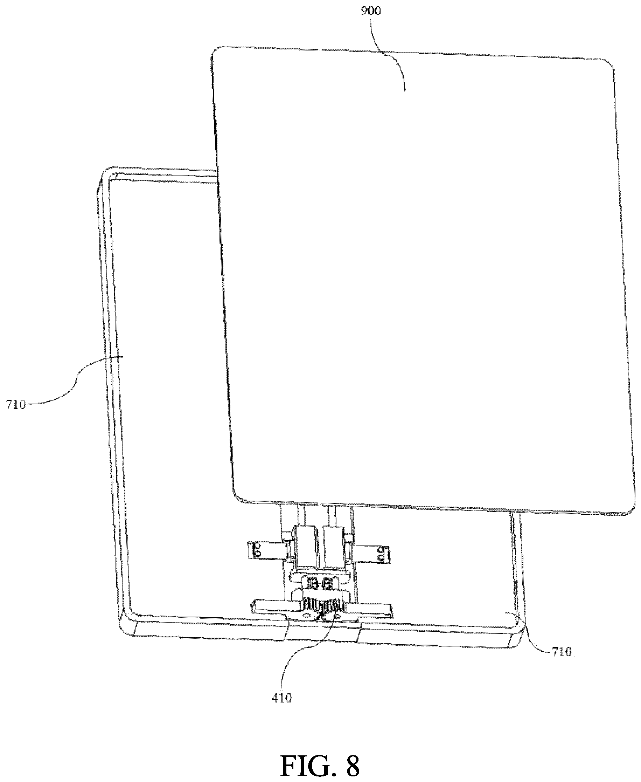

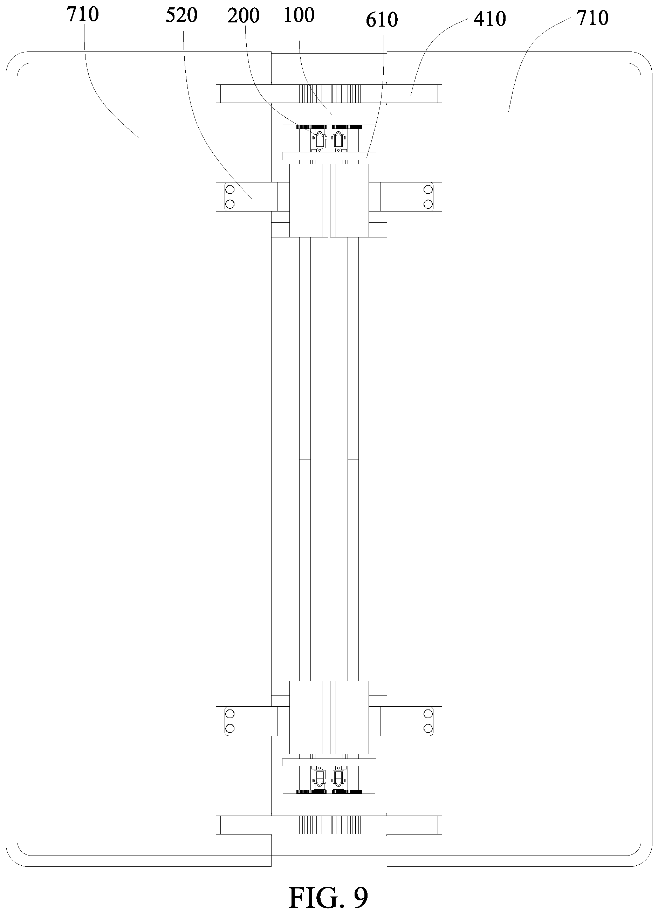

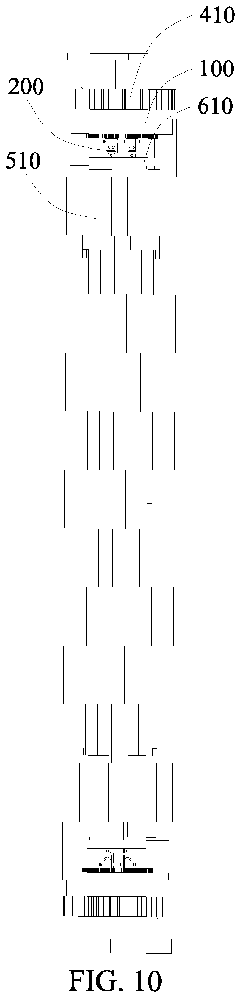

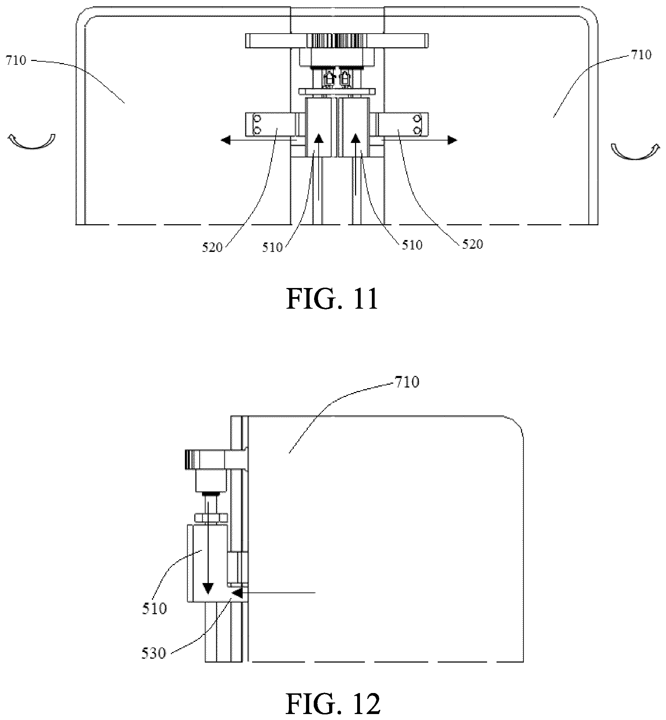

As shown in FIG. 1 to FIG. 12, the embodiments of this application disclose a foldable supporting apparatus and an electronic device. The foldable supporting apparatus may be applied to the electronic device, so that the electronic device forms a foldable electronic device. As shown in FIG. 8, the electronic device may include a flexible screen 900, and the flexible screen 900 is at least a part of a display module of the electronic device. The foldable supporting apparatus may be used to support the flexible screen 900 and enable the flexible screen 900 to have an unfolded state and a folded state, so that the electronic device can have both a relatively large display area and relatively good portability performance. The foldable supporting apparatus includes a mounting base 100, a rotating shaft 300, a telescopic assembly 200, a pushing assembly, and a base 710. The mounting base 100 is connected to the pushing assembly through the telescopic assembly 200, and the pushing assembly is connected to the base 710.

It is to be noted that, in a case that the electronic device adopts the foregoing foldable supporting apparatus, the display module of the electronic device may include an entire flexible screen 900, and the flexible screen 900 may be supported on the foldable supporting apparatus; or the electronic device may include one flexible screen 900 and at least two hard screens, and there are at least two bases 710. The plurality of hard screens may be respectively supported on the plurality of bases 710. The flexible screen 900 is connected between two adjacent hard screens, and by supporting the flexible screen 900 in a partial structure in the foldable supporting apparatus that can produce folding and unfolding actions, it can be ensured that the electronic device can switch between an unfolded state and a folded state. To facilitate the following description, an example in which the display module of the electronic device includes an entire flexible screen 900 is always used below.

The base 710 is a component of the foldable supporting apparatus that is configured to position and support the flexible screen 900 of the electronic device. Two opposite ends of the flexible screen 900 are fixedly connected to the base 710. During folding and unfolding actions of the foldable supporting apparatus, the part of the flexible screen 900 mounted on the base 710 can always keep a relative fixed relationship with the base 710, and drive the part of the flexible screen 900 corresponding to the structure on the foldable supporting apparatus that can produce a folding action (which may be regarded as a middle part of the flexible screen 900) to produce folding and unfolding actions. The base 710 may be specifically made of materials such as metal or plastic, the general shape of the base 710 may be a rectangle, and the size of the base 710 may be determined according to actual needs, which is not limited herein.

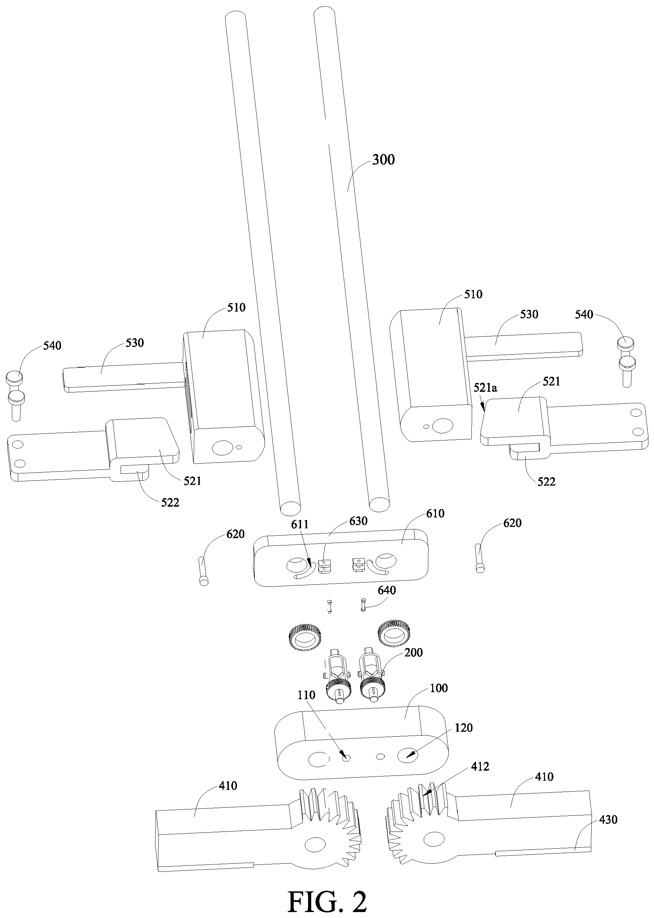

The mounting base 100 is rotatably connected to the rotating shaft 300. Specifically, as shown in FIG. 2, the mounting base 100 is provided with a shaft hole 120, and the rotating shaft 300 is rotatably mounted in the shaft hole 120, so that there is a relative rotation capability between the mounting base 100 and the rotating shaft 300. In addition, the mounting base 100 is further relatively fixed to the rotating shaft 300 in an axial direction of the rotating shaft 300. Therefore, when the telescopic assembly 200 produces a telescopic action, the mounting base 100 may be used to provide a fixing foundation for the telescopic assembly 200, so that the telescopic assembly 200 has the capability to drive a component connected to the telescopic assembly 200, that is, drive the pushing assembly to move relative to the mounting base 100. Specifically, after the rotating shaft 300 is sleeved on the mounting base 100, by arranging limiting structures at two opposite ends of the mounting base 100 respectively, the rotating shaft 300 and the mounting base 100 can form a relative fixed relationship in the axial direction of the rotating shaft 300.

In addition, when the foldable supporting apparatus is applied to the electronic device, the mounting base 100 may be used to provide support for the middle part of the flexible screen 900. Certainly, other structures such as an elastic sheet with a deformation capability and a load-bearing capability may also be arranged to provide support for the middle part of the flexible screen 900, thereby ensuring that the flexible screen 900 has a relatively good effect of being supported regardless of whether the flexible screen 900 is in the folded state or the unfolded state. It is to be noted that, in a case that the mounting base 100 is used as a component for supporting the flexible screen 900, the specific shape and size of the mounting base 100 need to be limited, to prevent the mounting base 100 from being convex, recessed, or the like relative to the base 710 due to an excessively large or excessively small size of the mounting base 100, which adversely affects the support of the foldable supporting apparatus for the flexible screen 900. A person skilled in the art may flexibly determine the actual size and the actual shape of the mounting base 100 according to relative positions of the base 710 and the mounting base 100, which is not limited herein.

The pushing assembly and the rotating shaft 300 are relatively fixed in a circumferential direction of the rotating shaft 300, so that the pushing assembly has the capability to rotate with the rotating shaft 300. In addition, the pushing assembly and the rotating shaft 300 flexibly are movably matched in the axial direction of the rotating shaft 300, so that the pushing assembly is movable relative to the rotating shaft 300 in the axial direction of the rotating shaft 300, and then in a process in which the telescopic assembly 200 produces a telescopic action, the telescopic assembly 200 can drive, based on the mounting base 100, the pushing assembly to move relative to the rotating shaft 300 in the axial direction of the rotating shaft 300, to provide a driving condition for relative movement between the base 710 and the rotating shaft 300. Specifically, the pushing assembly may be sleeved on the rotating shaft 300, and the rotating shaft 300 and the pushing assembly are connected to each other through a key connection, so that when it can be ensured that the pushing assembly and the rotating shaft 300 are relatively fixed in the circumferential direction of the rotating shaft 300, the pushing assembly and the rotating shaft 300 can be further movably matched in the axial direction of the rotating shaft 300.

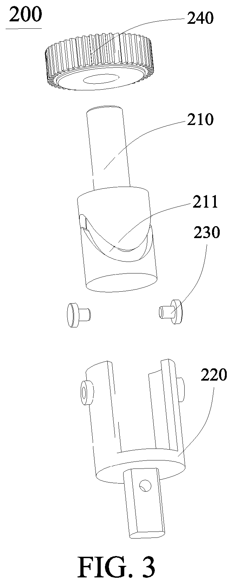

As described above, the mounting base 100 is connected to the pushing assembly through the telescopic assembly 200. More specifically, as shown in FIG. 1, the telescopic assembly 200 is arranged between the mounting base 100 and the pushing assembly in the axial direction of the rotating shaft 300. In addition, as shown in FIG. 3, the telescopic assembly 200 includes a rotating member 210 and a push-pull member 220. The rotating member 210 is in transmission connection with the rotating shaft 300. Specifically, by respectively sleeving gears 240 on the rotating member 210 and the rotating shaft 300, the rotating shaft 300 can be in transmission connection with the rotating member 210 through gear transmission. Therefore, in a case that the rotating shaft 300 rotates, the rotating member 210 can be driven to rotate together, thereby providing a driving action force for the telescopic action of the telescopic assembly 200.

In the axial direction of the rotating shaft 300, one of the rotating member 210 and the push-pull member 220 is relatively fixed to the mounting base 100, and the other thereof is relatively fixed to the pushing assembly, so that the telescopic assembly 200 can apply a telescopic driving action force to the mounting base 100 and the pushing assembly. Because the mounting base 100 and the rotating shaft 300 are relatively fixed in the axial direction of the rotating shaft 300, the telescopic assembly 200 can transmit the telescopic driving action force to the pushing assembly, thereby enabling the pushing assembly to move relative to the rotating shaft 300 in the axial direction of the rotating shaft 300.

Specifically, in a process of mounting the telescopic assembly 200 between the mounting base 100 and the pushing assembly, one of the mounting base 100 and the pushing assembly may be fixedly connected to the push-pull member 220, and the other of the mounting base 100 and the pushing assembly may form a relative fixed relationship with the rotating member 210 in the axial direction of the rotating shaft 300 by using devices such as a bearing or a universal joint, so that the rotation process of the rotating member 210 relative to the push-pull member 220 can be not hindered.

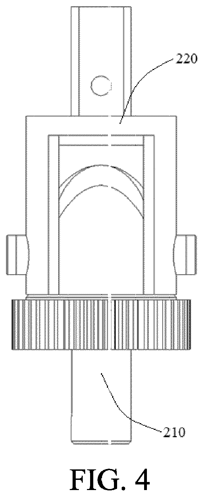

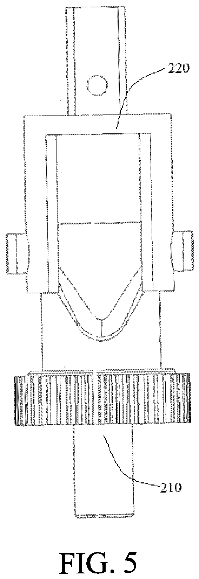

Correspondingly, to ensure that the rotating member 210 and the push-pull member 220 have the capability to enable the telescopic assembly 200 to produce a telescopic action, as shown in FIG. 3, one of the rotating member 210 and the push-pull member 220 is provided with a sliding groove 211, and the other thereof is provided with a slider 230, where the slider 230 switches between a first position and a second position along the sliding groove 211 in a reciprocating manner, to change a distance between the mounting base 100 and the pushing assembly in the axial direction of the rotating shaft 300. That is, as shown in FIG. 4 and FIG. 5, in this application, the slider 230 is used to match with the sliding groove 211 with a specific trajectory, and the slider 230 is located at different positions of the sliding groove 211, to change the maximum distance between the rotating member 210 and the push-pull member 220, that is, the distance between the mounting base 100 and the pushing assembly.

Specifically, the sliding groove 211 may be spirally extended around an outer periphery of the rotating member 210 or the push-pull member 220, so that when the slider 230 slides along the sliding groove 211, the maximum distance between the rotating member 210 and the push-pull member 220 can be changed. Certainly, the specific structure of the sliding groove 211 may be determined according to an actual folding form of the electronic device formed by the foldable supporting apparatus disclosed in this embodiment of this application.

The base 710 is connected to an end of the pushing assembly facing away from the rotating shaft 300, so that the pushing assembly can drive the base 710 to move. In addition, the pushing assembly is provided with a first inclined pushing surface 511a, where the first inclined pushing surface 511a is configured to change a distance between the base 710 and the rotating shaft 300 in a radial direction of the rotating shaft 300 in a reciprocating manner in a case that the pushing assembly reciprocates in the axial direction of the rotating shaft 300. To achieve the foregoing technical objective, the first inclined pushing surface 511a may have a first component in the axial direction of the rotating shaft 300 and a second component in the radial direction of the rotating shaft 300, so that in a process in which the telescopic assembly 200 produces a telescopic action, and the pushing assembly is driven to move relative to the rotating shaft 300 in the axial direction of the rotating shaft 300, the pushing assembly can drive the base 710 to move relative to the rotating shaft 300 in the radial direction of the rotating shaft 300. A relative movement direction between the base 710 and the rotating shaft 300 may be determined according to a movement direction of the pushing assembly. The base 710 and the rotating shaft 300 being close to each other or being away from each other corresponds to that the telescopic assembly 200 produces an elongation action and produces a retraction action, which may be correspondingly determined according to the folding form of the electronic device in an actual application.

In addition, in addition to the mutual matching between the pushing assembly and the base 710 through the first inclined pushing surface 511a, other connection relationships may alternatively be formed between the pushing assembly and the base 710, so that the two components can form a reliable connection relationship. For example, an end of the pushing assembly facing away from the rotating shaft 300 may form a slidable matching relationship with the base 710, and a slidable matching direction of the two components is inclined relative to both the axial direction and the radial direction of the rotating shaft 300; and by making the two components form a limiting matching relationship in directions other than the foregoing sliding matching direction, the base 710 and the pushing assembly can form a more reliable connection relationship.

Specifically, the specific folding manner of the electronic device may be determined according to actual needs. The electronic device may be an inward-folding electronic device. In this case, when the electronic device is in the folded state, the flexible screen 900 is located on an inner side and is covered by the foldable supporting apparatus. This type of electronic device can provide a relatively good protective effect for the flexible screen 900, to prevent the electronic device from being bumped to damage the flexible screen 900; and a situation that the flexible screen 900 is accidentally touched when the electronic device is in states such as being carried or being stored can also be prevented. In a case that the electronic device is an inward-folding electronic device, when the electronic device is in the unfolded state, the distance between the base 710 and the rotating shaft 300 is relatively short; and when the electronic device is in the folded state, the distance between the base 710 and the rotating shaft 300 is relatively long. The inward-folding electronic device provided in this embodiment can compensate for the difference in the distance between the two ends of the screen in the folded state and the unfolded state, thereby avoiding the problems of being tight and having relatively large internal stress of the screen in the unfolding process, and improving the stability of the electronic device.

Alternatively, the electronic device may be an outward-folding electronic device. In this case, when the electronic device is in the folded state, the flexible screen 900 is located on an outer side, and the flexible screen 900 covers the foldable supporting apparatus. A bent degree of the flexible screen 900 of this type of electronic device is relatively low, which can prolong the service life of the flexible screen 900; and when the electronic device is in the folded state, no gap will be generated between different parts of the flexible screen 900, thereby preventing fine objects from entering the foregoing gap to rub against and damage the flexible screen 900. In a case that the electronic device is an outward-folding electronic device, when the electronic device is in the unfolded state, the distance between the base 710 and the rotating shaft 300 is relatively long; and when the electronic device is in the folded state, the distance between the base 710 and the rotating shaft 300 is relatively short. The outward-folding electronic device provided in this embodiment can compensate for the difference in the distance between the two ends of the screen in the folded state and the unfolded state, thereby avoiding the problems of being tight and having relatively large internal stress of the screen in the folding process, and improving the stability of the electronic device.

The embodiments of this application disclose a foldable supporting apparatus and an electronic device. The foldable supporting apparatus includes a mounting base 100, a rotating shaft 300, a telescopic assembly 200, a pushing assembly, and a base 710, where the mounting base 100 is rotatably connected to the rotating shaft 300, and the mounting base 100 and the rotating shaft 300 are relatively fixed in an axial direction of the rotating shaft 300. The pushing assembly is connected to the mounting base 100 through the telescopic assembly 200, one of a rotating member 210 and a push-pull member 220 of the telescopic assembly 200 is provided with a sliding groove 211, and the other thereof is provided with a slider 230, where the slider 230 can switch between a first position and a second position of the sliding groove 211 in a reciprocating manner, to change a distance between the mounting base 100 and the pushing assembly in the axial direction of the rotating shaft 300. In addition, the base 710 is further connected to an end of the pushing assembly facing away from the rotating shaft 300, and the pushing assembly is provided with a first inclined pushing surface 511a. Under the action of the first inclined pushing surface 511a, a distance between the base 710 and the rotating shaft 300 in a radial direction of the rotating shaft 300 can be changed when the pushing assembly moves relative to the rotating shaft 300 in the axial direction of the rotating shaft 300, so that the foldable supporting apparatus have the conditions for forming a foldable electronic device. Therefore, the foldable supporting apparatus can be used to match with the flexible screen 900 to form a foldable electronic device. The foldable electronic device has both large display area and good portability performance, which can meet needs of a user. In addition, the base and the pushing assembly are connected, and during rotation of the rotating shaft, the pushing assembly may push the base to move to change the distance between the base and the rotating shaft. By changing the distance between the base and the rotating shaft in a folding process and an unfolding process, a difference in a distance between two ends of the screen in a folded state and an unfolded state can be compensated for, thereby preventing the screen from generating large internal stress and improving the stability of the foldable electronic device.

In the foldable supporting apparatus disclosed in the foregoing embodiments, the base 710 and the mounting base 100 may be connected only through the pushing assembly, and a stable assembly relationship can be formed between the pushing assembly and the base 710 in manners such as increasing the quantity of pushing assemblies and increasing the size of the pushing assembly to improve the connection capacity thereof, there ensuring that the connection relationship between the base 710 and the rotating shaft 300 is relatively stable even if only the pushing assembly is used as a bridge structure between the base 710 and the rotating shaft 300.

As described above, rotation of the rotating shaft 300 can drive the telescopic assembly 200 to produce a telescopic action. Based on this, the rotating shaft 300 and the base 710 are connected to each other, so that when the base 710 rotates relative to the mounting base 100, the rotating shaft 300 can be driven to rotate relative to the mounting base 100. Specifically, devices with telescopic capabilities such as a telescopic rod may be used to enable the base 710 and the rotating shaft 300 to form a connection relationship. One end of the telescopic rod is fixedly connected to the base 710, and the other end of the telescopic rod is fixedly connected to the rotating shaft 300, so that when the base 710 rotates relative to the mounting base 100, the telescopic rod may be used to drive the rotating shaft 300 to rotate relative to the mounting base 100, thereby driving the rotating member 210 to rotate. Certainly, other components such as a synchronizing member 410 mentioned below may also be used to connect the rotating shaft 300 and the base 710, which can also enable the base 710 to have the capability to drive the rotating shaft 300 to rotate.

Further, as shown in FIG. 1 and FIG. 2, the pushing assembly may include a sliding portion 510 and a driving portion 520. The sliding portion 510 is movably connected to the driving portion 520. The sliding portion 510 and the rotating shaft 300 are relatively fixed in the circumferential direction of the rotating shaft 300, and are movably matched in the axial direction of the rotating shaft 300, so that in a case that the telescopic assembly 200 produces a telescopic action, the telescopic assembly 200 can drive, based on the mounting base 100, the sliding portion 510 to move relative to the rotating shaft 300 in the axial direction of the rotating shaft 300.

In addition, the first inclined pushing surface 511a is provided on the sliding portion 510, and the driving portion 520 is further provided with a second inclined pushing surface 521a. The second inclined pushing surface 521a is slidably matched with the first inclined pushing surface 511a. An end of the driving portion 520 facing away from the rotating shaft 300 is fixedly connected to the base 710, so that the rotating shaft 300 and the base 710 form a more stable driving matching relationship through surface matching, thereby improving the reliability of the pushing assembly.

Specifically, both the sliding portion 510 and the driving portion 520 may be rod-shaped structural members, and the sliding portion 510 may be sleeved on the rotating shaft 300 and connected to the rotating shaft 300 through a key connection. An end of the driving portion 520 facing away from the sliding portion 510 may be fixedly connected to the base 710 in manners such as welding or bonding. Certainly, the driving portion 520 and the base 710 may alternatively form a fixed connection relationship in other manners. The first inclined pushing surface 511a may be provided at an end of the sliding portion 510 facing away from the rotating shaft 300, and the second inclined pushing surface 521a may be provided at an end of the driving portion 520 facing away from the base 710. The first inclined pushing surface 511a on the sliding portion 510 and the second inclined pushing surface 521a on the driving portion 520 are provided in a matching manner, and structures and sizes of the two components are corresponding to each other. Similarly, a stable matching relationship may be formed between the first inclined pushing surface 511a and the second inclined pushing surface 521a through a sliding rail-sliding groove structure.

In another embodiment of this application, one of the sliding portion 510 and the driving portion 520 is provided with an accommodating groove 511, and the other thereof includes an insertion block 521. The insertion block 521 is inserted into the accommodating groove 511, and the insertion block 521 and the accommodating groove 511 are relatively fixed in a supporting direction of the base 710, so that the stability of the matching relationship between the sliding portion 510 and the driving portion 520 is higher. One of the first inclined pushing surface 511a and the second inclined pushing surface 521a is provided at a bottom of the accommodating groove 511, and the other thereof is provided at an end of the insertion block 521 facing away from the base 710, thereby ensuring that a slidable matching relationship can still be formed between the sliding portion 510 and the driving portion 520 through the first inclined pushing surface 511a and the second inclined pushing surface 521a.

Further, the accommodating groove 511 may be provided on the sliding portion 510, and correspondingly, the insertion block 521 is a part of the driving portion 520. In this case, the sliding portion 510 may further be provided with a limiting groove 512, and the driving portion 520 may further include a limiting block 522. The limiting block 522 is inserted into the limiting groove 512 in the radial direction of the rotating shaft 300, the limiting groove 512 and the accommodating groove 511 are distributed in the supporting direction of the base 710, and the limiting block 522 and the limiting groove 512 are relatively fixed in the supporting direction of the base 710. That is, in this embodiment of this application, the sliding portion 510 and the driving portion 520 are further connected to each other through the limiting block 522 and the limiting groove 512 that are slidably matched, which can further improve the reliability of the connection between the sliding portion 510 and the driving portion 520. In addition, by distributing the accommodating groove 511 and the limiting groove 512 in the supporting direction of the base 710, the relative fixed relationship between the sliding portion 510 and the driving portion 520 in the supporting direction of the base 710 is more stable, thereby further improving the stability of the connection relationship between the base 710 and the rotating shaft 300.

Specifically, both the limiting block 522 and the insertion block 521 may have rod-shaped structures. To improve the stability of the driving effect of the pushing assembly, the insertion block 521 may be a plate-shaped structural member, to increase an area of the first inclined pushing surface 511a (or the second inclined pushing surface 521a), thereby improving the reliability of the matching between the sliding portion 510 and the driving portion 520.

In another embodiment of this application, optionally, as shown in FIG. 2, the pushing assembly may further include a guiding portion 530, the base 710 is provided with a movable cavity, and the guiding portion 530 is fixedly connected to a side of the sliding portion 510 facing the base 710. Further, by making the guiding portion 530 extend into the movable cavity, and making the guiding portion 530 and the movable cavity be movably matched in a direction perpendicular to the supporting direction of the base 710 and the axial direction of the rotating shaft 300, the guiding portion 530 can provide guiding and limiting functions for relative movement between the base 710 and the pushing assembly in the radial direction of the rotating shaft 300, thereby further improving the stability of the matching relationship between the pushing assembly and the base 710.

Specifically, the guiding portion 530 may be a guiding rod, and the shape and the size of the movable cavity may be designed correspondingly according to the shape and the size of the guiding rod, thereby ensuring that a relatively close matching relationship is formed between the guiding rod and the movable cavity, and a limiting matching relationship is formed between the guiding rod and the base 710 in directions other than the radial direction of the rotating shaft 300. More specifically, in a case that the pushing assembly includes the sliding portion 510 and the driving portion 520, the guiding rod may be arranged on a side of the sliding portion 510 facing the base 710, and the guiding portion 530 and the sliding portion 510 may be fixed to each other by bonding, connecting through a connecting member 620, or the like. Alternatively, the guiding portion 530 and the sliding portion 510 may be formed by integral molding.

As described above, the base 710 and the rotating shaft 300 may alternatively be connected to each other through a synchronizing member 410. In a case that the foldable supporting apparatus includes a synchronizing member 410, the synchronizing member 410 may be fixedly connected to the rotating shaft 300, and the synchronizing member 410 and the base 710 may be movably matched in the radial direction of the rotating shaft 300. Optionally, the foldable supporting apparatus includes a movable connection assembly, and the synchronizing member 410 is movably matched with the base 710 in the radial direction of the rotating shaft 300 through the movable connection assembly. Specifically, the movable connection assembly may be a shaft-hole type matching assembly. More specifically, one of the base 710 and the synchronizing member 410 may be provided with a hole, and the other thereof may be provided with a shaft. By making the shaft run through the hole, the reliability of the matching relationship between the base 710 and the synchronizing member 410 can be higher.

In another embodiment of this application, as shown in FIG. 2, the movable connection assembly includes a dovetail block 430 and a dovetail groove. The dovetail block 430 and the dovetail groove are slidably matched. The dovetail groove extends in a direction perpendicular to the axial direction of the rotating shaft 300. In addition, one of the dovetail block 430 and the dovetail groove is provided on a side of the synchronizing member 410 facing the base 710, and the other thereof is provided on a side of the base 710 facing the synchronizing member 410, so that the base 710 and the synchronizing member 410 are connected through the dovetail groove and the dovetail block 430 that are slidably matched, and the base 710 and the synchronizing member 410 can only move relative to each other in the radial direction of the rotating shaft 300, and form a limiting matching relationship in a direction perpendicular to the radial direction of the rotating shaft 300. The stability and the reliability of the movable relationship between the dovetail groove and the dovetail block 430 are relatively high, which can further improve the reliability of the connection between the base 710 and the synchronizing member 410.

More specifically, because the size of the base 710 is relatively large, the dovetail groove may be provided on the base 710, to reduce the adverse impact of the provision of the dovetail groove on the structural strength of the component. Correspondingly, the dovetail block 430 may be arranged on the synchronizing member 410, and the dovetail block 430 and the synchronizing member 410 may be formed by integral molding, to improve the reliability of the connection between the dovetail block 430 and the synchronizing member 410. In addition, each synchronizing member 410 may be provided with a plurality of dovetail blocks 430 or dovetail grooves, and the synchronizing member 410 may be matched with the corresponding structures on the base 710 one by one through the plurality of dovetail blocks 430 or dovetail grooves, thereby further improving the reliability of the matching between the synchronizing member 410 and the base 710.

In a case that the foldable supporting apparatus includes a synchronizing member 410, there may be a plurality of bases 710, and the plurality of bases 710 may all provide a support function for the flexible screen 900. In a case that there are a plurality of bases 710, two rotating shafts 300 may be arranged between two adjacent bases 710, and the two rotating shafts 300 are each provided with a telescopic assembly 200 and a pushing assembly in a one-to-one correspondence manner, to respectively drive the two bases 710 to move relative to the two rotating shafts 300; and synchronizing members 410 are arranged for the two adjacent bases 710 in a one-to-one correspondence manner, and the two correspondingly arranged synchronizing members 410 are in transmission connection. In addition, in this embodiment, each base 710 is provided with a synchronizing member 410, and two synchronizing members 410 correspondingly arranged on two bases 710 are in transmission connection. Intuitively, the two correspondingly arranged synchronizing members 410 are two synchronizing members 410 adjacent to each other in the radial direction of the rotating shaft 300 on the two adjacent bases 710. By adopting the foregoing technical solution, the two bases 710 have the synchronous rotation capability, so that in a case that any base 710 is flipped based on the mounting base 100, the other base 710 can produce a flipping action together, to keep actions of the two bases 710 consistent, so that deformation amplitudes of corresponding positions on the flexible screen 900 are similar or the same, which can also improve the reliability of the electronic device.

Specifically, the manner of transmission matching between the corresponding synchronizing members 410 on the two bases 710 may be a gear 240 transmission structure. More specifically, as shown in FIG. 2, the synchronizing members 410 may be each provided with meshing teeth 412, and the respective meshing teeth 412 of the corresponding synchronizing members 410 on the two bases 710 are meshed with each other, so that when any synchronizing member 410 rotates with the base 710, the other synchronizing member 410 can be driven, through the meshing teeth 412, to drive the base 710 to rotate, thereby providing the two adjacent bases 710 in the foldable supporting apparatus with the synchronous rotation capability.

As described above, the push-pull member 220 and the rotating member 210 are connected to each other through a slider 230 and a sliding groove 211 that are slidably matched. In this embodiment of this application, optionally, the sliding groove 211 is provided on an outer wall of the rotating member 210, the push-pull member 220 is sleeved outside the rotating member 210, and the push-pull member 220 is provided with a run-through hole. An end of the slider 230 passes through the run-through hole to extend into the sliding groove 211, and the slider 230 is detachably fixedly connected to the push-pull member 220. In a case that the foregoing technical solution is adopted, a detachable connection relationship is formed between the push-pull member 220 and the rotating member 210, so that the tightness of the connection between the push-pull member 220 and the rotating member 210 can be changed, thereby improving the stability and the reliability of the matching between the push-pull member 220 and the rotating member 210 while reducing the difficulty of the matching between the push-pull member 220 and the rotating member 210.

Specifically, the slider 230 may be a threaded connecting member, and the run-through hole may be a threaded hole. In a case that the push-pull member 220 is sleeved outside the rotating member 210, the slider 230 is used to screw into the run-through hole, through which matching between and the slider 230 and the sliding groove 211 is realized, and the push-pull member 220 and the rotating member 210 are connected, so that the slider 230 is movable along the sliding groove 211, and the rotating member 210 and the push-pull member 220 have the capability to rotate and move relative to each other.

Optionally, there are a plurality of sliders 230 and a plurality of sliding grooves 211, the plurality of sliders 230 are matched with the plurality of sliding grooves 211 in a one-to-one correspondence manner, and the plurality of sliders 230 are spaced apart in the circumferential direction of the rotating member 210. In this case, the effect of slidable matching between the slider 230 and the sliding groove 211 can be improved, thereby making the reliability of the connection between the push-pull member 220 and the rotating member 210 relatively high.

As described above, in the axial direction of the rotating shaft 300, one of the rotating member 210 and the push-pull member 220 in the telescopic assembly 200 is relatively fixed to the mounting base 100, and the other thereof is relatively fixed to the pushing assembly. Optionally, the foldable supporting apparatus further includes a bridge member 610. The bridge member 610 can provide a bridging function, so that the telescopic assembly 200 and the pushing assembly are indirectly connected through the bridge member 610.

More specifically, the rotating member 210 in the telescopic assembly 200 may be connected to the mounting base 100, and the push-pull member 220 may be connected to the pushing assembly. To improve the reliability of the connection relationship between the rotating member 210 and the mounting base 100, the mounting base 100 may be provided with a mounting hole 110, the rotating member 210 may be inserted into the mounting hole 110, and the rotating member 210 may be rotatably matched with the mounting hole 110.

In this case, the bridge member 610 may be sleeved on the rotating shaft 300, and the rotating shaft 300 is rotatably matched with the bridge member 610, thereby preventing the arrangement of the bridge member 610 from adversely affecting the rotation process of the rotating shaft 300. In addition, the push-pull member 220, the bridge member 610, and the pushing assembly are all relatively fixed in the axial direction of the rotating shaft 300. In a case that the foregoing technical solution is adopted, the difficulty of direct connection between the telescopic assembly 200 and the pushing assembly can be reduced; and a bridge member 610 may be used to match with two pushing assemblies simultaneously, so that action consistency of pushing assemblies respectively matched with the two bases 710 can be improved.

Specifically, the bridge member 610 may be provided with a through hole, and the rotating shaft 300 passes through the through hole, then the bridge member 610 can be rotatably mounted on the rotating shaft 300, thereby providing the rotating shaft 300 with the capability to rotate relative to the bridge member 610. A relative fixed relationship in the axial direction of the rotating shaft 300 may be formed between the bridge member 610 and the pushing assembly through structures such as a sleeve. Specifically, the sleeve may be sleeved on the rotating shaft 300 and sandwiched between the bridge member 610 and the pushing assembly, so that when the pushing assembly moves in the axial direction of the rotating shaft 300 with the telescopic assembly 200, the pushing assembly can be driven by the sleeve to move in the axial direction of the rotating shaft 300. Certainly, in this case, two opposite ends of the sleeve need to form a limiting relationship in the axial direction of the rotating shaft 300 with the bridge member 610 and the pushing assembly respectively. The bridge member 610 and the push-pull member may be fixedly connected, so that when the rotating member 210 rotates with the rotating shaft 300 and drives the push-pull member to move in the axial direction of the rotating shaft 300, the push-pull member can drive the bridge member 610 to move in the axial direction of the rotating shaft 300.

In another embodiment of this application, the bridge member 610 and the push-pull member 220 may be connected to each other in a detachable connection manner. Specifically, a fixing base 630 may be arranged on the bridge member 610, and both the fixing base 630 and the push-pull member 220 may be provided with through holes. Connecting members 620 such as bolts 640 pass through the through holes on the fixing base 630 and the push-pull member 220, so that the push-pull member 220 and the fixing base 630 can form a detachable fixed connection relationship, thereby enabling the push-pull member 220 and the bridge member 610 to form a relative fixed relationship in the axial direction of the rotating shaft 300, and facilitating replacement and maintenance of the components.

Optionally, the bridge member 610 is provided with an arc-shaped through hole 611. In this case, the bridge member 610 may be relatively fixed to the pushing assembly in the axial direction of the rotating shaft 300 through a connecting member 620 passing through the arc-shaped through hole 611, and the connecting member 620 is movable along the arc-shaped through hole 611 with rotation of the pushing assembly. That is, in this application, the bridge member 610 is relatively fixed to the pushing assembly in the axial direction of the rotating shaft 300 through the connecting member 620, and the arc-shaped through hole 611 is formed on the bridge member 610, so that the connecting member 620 is movable within the arc-shaped through hole 611 with rotation of the pushing assembly, to ensure that the connecting member 620 will not adversely affect the rotation of the pushing assembly. In a case that this technical solution is adopted, the reliability of the fixed relationship between the bridge member 610 and the pushing assembly in the axial direction of the rotating shaft 300 can be improved, and the difficulty of assembly between the bridge member 610 and the pushing assembly can be reduced.

Specifically, the connecting member 620 may be a threaded member. By forming a threaded hole on the pushing assembly and making the connecting member 620 pass through the arc-shaped through hole 611 to connect to the pushing assembly, the pushing assembly and the bridge member 610 can form a relative fixed relationship in the axial direction of the rotating shaft 300.

Based on the foldable supporting apparatus disclosed in any one of the foregoing embodiments, an embodiment of this application further discloses an electronic device. The electronic device includes a flexible screen 900 and any one of the foregoing foldable supporting apparatuses. The flexible screen 900 is mounted on the foldable supporting apparatus. As described above, the foldable supporting apparatus may form an inward-folding electronic device or an outward-folding electronic device. In addition, during assembly of the electronic device, a specific structure of the sliding groove 211 and a mounting position of the flexible screen 900 may be determined according to a specific folding form of the electronic device. Certainly, during mounting of the flexible screen 900, two opposite ends of the flexible screen 900 need to be fixed to the foldable supporting apparatus, to ensure that the flexible screen 900 can normally produce folding and unfolding actions with the foldable supporting apparatus. By using FIG. 8 as an example, the foregoing two opposite ends are specifically the left end and the right end of the flexible screen 900 in the figure.

It is to be noted that, the terms "include", "comprise", or any other variation thereof in this specification is intended to cover a non-exclusive inclusion, which specifies the presence of stated processes, methods, objects, or apparatuses, but do not preclude the presence or addition of one or more other processes, methods, objects, or apparatuses. Without more limitations, elements defined by the sentence "including one..." does not exclude that there are still other same elements in the processes, methods, objects, or apparatuses. In addition, it is to be noted that the scope of the methods and apparatuses in the implementations of this application is not limited to performing functions in the shown or discussed order, and may further include performing functions in a substantially simultaneous manner or in a reverse order according to the functions involved. For example, the described methods may be performed in an order different from that described, and various steps may be added, omitted, or combined. In addition, features described with reference to some examples may also be combined in other examples.

The embodiments of this application are described above with reference to the accompanying drawings. However, this application is not limited to the foregoing specific implementations. The foregoing specific implementations are merely illustrative rather than limitative. A person of ordinary skill in the art may derive various forms from this application without departing from the scope claimed by the claims.

## Claims

1. A foldable supporting apparatus, comprising a mounting base (100), a rotating shaft (300), a telescopic assembly (200), a pushing assembly, and a base (710), wherein the mounting base (100) is rotatably connected to the rotating shaft (300), and the mounting base (100) and the rotating shaft (300) are relatively fixed in an axial direction of the rotating shaft (300); and the pushing assembly and the rotating shaft (300) are relatively fixed in a circumferential direction of the rotating shaft (300), and the pushing assembly and the rotating shaft (300) are movably matched in the axial direction;
the telescopic assembly (200) is arranged between the mounting base (100) and the pushing assembly in the axial direction of the rotating shaft (300), the telescopic assembly (200) comprises a rotating member (210) and a push-pull member (220), and the rotating member (210) is in transmission connection with the rotating shaft (300); in the axial direction of the rotating shaft (300), one of the rotating member (210) and the push-pull member (220) is relatively fixed to the mounting base (100), and the other thereof is relatively fixed to the pushing assembly; and one of the rotating member (210) and the push-pull member (220) is provided with a sliding groove (211), and the other thereof is provided with a slider (230), wherein the slider (230) switches between a first position and a second position along the sliding groove (211) in a reciprocating manner, to change a distance between the mounting base (100) and the pushing assembly in the axial direction; and
the base (710) is configured to support a display screen, the base (710) is connected to an end of the pushing assembly facing away from the rotating shaft (300), and the pushing assembly is provided with a first inclined pushing surface (511a), wherein the first inclined pushing surface (511a) is configured to change a distance between the base (710) and the rotating shaft (300) in a radial direction of the rotating shaft (300) in a reciprocating manner in a case that the pushing assembly reciprocates in the axial direction of the rotating shaft (300).

2. The foldable supporting apparatus according to claim 1, wherein the pushing assembly comprises a sliding portion (510) and a driving portion (520), the sliding portion (510) is movably connected to the driving portion (520), and the sliding portion (510) and the rotating shaft (300) are relatively fixed in the circumferential direction and movably matched in the axial direction; and the first inclined pushing surface (511a) is provided on the sliding portion (510), the driving portion (520) is provided with a second inclined pushing surface (521a), the second inclined pushing surface (521a) is slidably matched with the first inclined pushing surface (511a), and an end of the driving portion (520) facing away from the rotating shaft (300) is fixedly connected to the base (710).

3. The foldable supporting apparatus according to claim 2, wherein one of the sliding portion (510) and the driving portion (520) is provided with an accommodating groove (511), the other thereof comprises an insertion block (521), the insertion block (521) is inserted into the accommodating groove (511), the insertion block (521) and the accommodating groove (511) are relatively fixed in a supporting direction of the base (710), one of the first inclined pushing surface (511a) and the second inclined pushing surface (521a) is provided at a bottom of the accommodating groove (511), and the other thereof is provided at an end of the insertion block (521) facing away from the base (710).

4. The foldable supporting apparatus according to claim 3, wherein the sliding portion (510) is provided with the accommodating groove (511) and a limiting groove (512), the driving portion (520) comprises the insertion block (521) and a limiting block (522), the limiting block (522) is inserted into the limiting groove (512) in the radial direction of the rotating shaft (300), the limiting groove (512) and the accommodating groove (511) are distributed in the supporting direction of the base (710), and the limiting block (522) and the limiting groove (512) are relatively fixed in the supporting direction of the base (710).

5. The foldable supporting apparatus according to claim 2, wherein the pushing assembly further comprises a guiding portion (530), the base (710) is provided with a movable cavity, the guiding portion (530) is fixedly connected to a side of the sliding portion (510) facing the base (710), the guiding portion (530) extends into the movable cavity, and the guiding portion (530) and the movable cavity are movably matched in a direction perpendicular to a supporting direction of the base (710) and the axial direction of the rotating shaft (300).

6. The foldable supporting apparatus according to claim 1, further comprising a synchronizing member (410) and a movable connection assembly, wherein the synchronizing member (410) is fixedly connected to the rotating shaft (300), and the synchronizing member (410) is movably matched with the base (710) in the radial direction of the rotating shaft (300) through the movable connection assembly; and there are a plurality of bases (710), synchronizing members (410) are arranged for two adjacent bases (710) in a one-to-one correspondence manner, and the two correspondingly arranged synchronizing members (410) are in transmission connection.

7. The foldable supporting apparatus according to claim 6, wherein the movable connection assembly comprises a dovetail block (430) and a dovetail groove that are slidably matched with each other, one of the dovetail block (430) and the dovetail groove is provided on a side of the synchronizing member (410) facing the base (710), and the other thereof is provided on a side of the base (710) facing the synchronizing member (410).

8. The foldable supporting apparatus according to claim 1, wherein the push-pull member (220) is sleeved outside the rotating member (210), the push-pull member (220) is provided with a run-through hole, an end of the slider (230) passes through the run-through hole to extend into the sliding groove (211), and the slider (230) is detachably fixedly connected to the push-pull member (220).

9. The foldable supporting apparatus according to claim 1, wherein there are a plurality of sliding grooves (211) and a plurality of sliders (230), the plurality of sliders (230) are matched with the plurality of sliding grooves (211) in a one-to-one correspondence manner, and the plurality of sliders (230) are spaced apart in a circumferential direction of the rotating member (210).

10. The foldable supporting apparatus according to claim 1, further comprising a bridge member (610), wherein the bridge member (610) is sleeved on the rotating shaft (300), the rotating shaft (300) is rotatably matched with the bridge member (610), and the push-pull member (220), the bridge member (610), and the pushing assembly are all relatively fixed in the axial direction.

11. The foldable supporting apparatus according to claim 10, wherein the bridge member (610) is provided with an arc-shaped through hole (611), the bridge member (610) is relatively fixed to the pushing assembly in the axial direction through a connecting member (620) passing through the arc-shaped through hole (611), and the connecting member (620) is movable along the arc-shaped through hole (611) with rotation of the pushing assembly.

12. An electronic device, comprising a flexible screen (900) and the foldable supporting apparatus according to any one of claims 1 to 11, wherein two opposite ends of the flexible screen (900) are both fixed to the foldable supporting apparatus.

## Patentansprüche

1. Faltbare Stützvorrichtung, umfassend eine Montagebasis (100), eine Drehwelle (300), eine Teleskopanordnung (200), eine Schiebeanordnung und eine Basis (710), wobei die Montagebasis (100) drehbar mit der Drehwelle (300) verbunden ist, und die Montagebasis (100) und die Drehwelle (300) in einer axialen Richtung der Drehwelle (300) in Bezug aufeinander fixiert sind; und die Schiebeanordnung und die Drehwelle (300) in einer Umfangsrichtung der Drehwelle (300) in Bezug aufeinander fixiert sind, und die Schiebeanordnung und die Drehwelle (300) in axialer Richtung bewegbar aufeinander abgestimmt sind;
die Teleskopanordnung (200) zwischen der Montagebasis (100) und der Schiebeanordnung in axialer Richtung der Drehwelle (300) angeordnet ist, die Teleskopanordnung (200) ein drehbares Element (210) und ein Push-Pull-Element (220) umfasst, und das Drehelement (210) in Übertragungsverbindung mit der Drehwelle (300) ist; in der axialen Richtung der Drehwelle (300) eines von dem Drehelement (210) und dem Push-Pull-Element (220) in Bezug aufeinander an der Montagebasis (100) fixiert ist und das andere davon in Bezug aufeinander an der Schiebeanordnung fixiert ist; und eines von dem Drehelement (210) und dem Push-Pull-Element (220) mit einer Gleitrille (211) und das andere mit einem Schieber (230) versehen ist, wobei der Schieber (230) zwischen einer ersten Position und einer zweiten Position entlang der Schieberille (211) hin und her schaltet, um einen Abstand zwischen der Montagebasis (100) und der Schiebeanordnung in der axialen Richtung zu ändern; und
die Basis (710) konfiguriert, um einen Bildschirm zu tragen, die Basis (710) mit einem von der Drehwelle (300) abgewandten Ende der Schiebeanordnung verbunden ist, und die Schiebeanordnung mit einer ersten geneigten Schiebefläche (511a) versehen ist, wobei die erste geneigte Schiebefläche (511a) konfiguriert ist, um einen Abstand zwischen der Basis (710) und der Drehwelle (300) in einer radialen Richtung der Drehwelle (300) auf eine hin- und hergehende Weise zu ändern, wenn sich die Schiebeanordnung in der axialen Richtung der Drehwelle (300) hin- und herbewegt.

2. Faltbare Stützvorrichtung nach Anspruch 1, wobei die Schiebeanordnung einen Gleitabschnitt (510) und einen Antriebsabschnitt (520) umfasst, der Gleitabschnitt (510) bewegbar mit dem Antriebsabschnitt (520) verbunden ist, und der Gleitabschnitt (510) und die Drehwelle (300) in der Umfangsrichtung in Bezug aufeinander fixiert und in der axialen Richtung bewegbar abgestimmt sind; und die erste geneigte Schiebefläche (511a) auf dem Gleitabschnitt (510) bereitgestellt ist, der Antriebsabschnitt (520) mit einer zweiten geneigten Schiebefläche (521a) versehen ist, die zweite geneigte Schiebefläche (521a) gleitend mit der ersten geneigten Schiebefläche (511a) abgestimmt ist, und ein von der Drehwelle (300) abgewandtes Ende des Antriebsabschnitts (520) fest mit der Basis (710) verbunden ist.

3. Faltbare Stützvorrichtung nach Anspruch 2, wobei einer von dem Gleitabschnitt (510) und dem Antriebsabschnitt (520) mit einer Aufnahmerille (511) versehen ist, der andere davon einen Einführungsblock (521) umfasst, der Einführungsblock (521) in die Aufnahmerille (511) eingeführt ist, der Einführungsblock (521) und die Aufnahmerille (511) in einer Stützrichtung der Basis (710) in Bezug aufeinander fixiert sind, eine von der ersten geneigten Schiebefläche (511a) und der zweiten geneigten Schiebefläche (521a) an einem Boden der Aufnahmerille (511) bereitgestellt ist, und der andere davon an einem von der Basis (710) abgewandten Ende des Einführungsblocks (521) bereitgestellt ist.

4. Faltbare Stützvorrichtung nach Anspruch 3, wobei der Gleitabschnitt (510) mit der Aufnahmerille (511) und einer Begrenzungsrille (512) versehen ist, der Antriebsabschnitt (520) den Einführungsblock (521) und einen Begrenzungsblock (522) umfasst, der Begrenzungsblock (522) in radialer Richtung der Drehwelle (300) in die Begrenzungsrille (512) eingeführt wird, die Begrenzungsrille (512) und die Aufnahmerille (511) in der Stützrichtung des Bodens (710) verteilt sind, und der Begrenzungsblock (522) und die Begrenzungsrille (512) in der Stützrichtung des Basis (710) in Bezug aufeinander fixiert sind.

5. Faltbare Stützvorrichtung nach Anspruch 2, wobei die Schiebevorrichtung ferner einen Führungsabschnitt (530) umfasst, die Basis (710) mit einem bewegbaren Hohlraum versehen ist, der Führungsabschnitt (530) fest mit einer der Basis (710) zugewandten Seite des Gleitabschnitts (510) verbunden ist, sich der Führungsabschnitt (530) in den bewegbaren Hohlraum erstreckt, und der Führungsabschnitt (530) und der bewegbare Hohlraum in einer Richtung senkrecht zu einer Stützrichtung der Basis (710) und der axialen Richtung der Drehwelle (300) bewegbar aufeinander abgestimmt sind.

6. Faltbare Stützvorrichtung nach Anspruch 1, ferner umfassend ein Synchronisierungselement (410) und eine bewegbare Verbindungsanordnung, wobei das Synchronisierungselement (410) fest mit der Drehwelle (300) verbunden ist, und das Synchronisationselement (410) durch die bewegbare Verbindungsanordnung in radialer Richtung der Drehwelle (300) bewegbar mit der Basis (710) abgestimmt ist; und es eine Vielzahl von Basen (710) gibt, Synchronisierungselemente (410) für zwei benachbarte Basen (710) in einer Eins-zu-Eins-Entsprechung angeordnet sind, und die zwei entsprechend angeordneten Synchronisierungselemente (410) in Übertragungsverbindung sind.

7. Faltbare Stützvorrichtung nach Anspruch 6, wobei die bewegbare Verbindungsanordnung einen Schwalbenschwanzblock (430) und eine Schwalbenschwanzrille umfasst, die gleitend miteinander abgestimmt sind, eines von dem Schwalbenschwanzblock (430) und der Schwalbenschwanzrille auf einer der Basis (710) zugewandten Seite des Synchronisationselements (410) bereitgestellt ist, und der/die andere davon auf einer dem Synchronisierungselement (410) zugewandten Seite der Basis (710) bereitgestellt ist.

8. Faltbare Stützvorrichtung nach Anspruch 1, wobei das Push-Pull-Element (220) außerhalb des Drehelements (210) aufgesteckt ist, das Push-Pull-Element (220) mit einer Durchgangsbohrung versehen ist, ein Ende des Schiebers (230) durch das Durchgangsloch verläuft, um sich in die Gleitrille (211) zu erstrecken, und der Schieber (230) lösbar fest mit dem Push-Pull-Element (220) verbunden ist.

9. Faltbare Stützvorrichtung nach Anspruch 1, wobei es eine Vielzahl von Gleitrillen (211) und eine Vielzahl von Schiebern (230) gibt, die Vielzahl von Schiebern (230) in einer Eins-zu-Eins-Entsprechung mit der Vielzahl von Gleitrillen (211) abgestimmt ist, und die Vielzahl von Schiebern (230) in einer Umfangsrichtung des Drehelements (210) voneinander beabstandet sind.

10. Faltbare Stützvorrichtung nach Anspruch 1, ferner umfassend ein Brückenelement (610), wobei das Brückenelement (610) auf die Drehwelle (300) aufgesteckt ist, die Drehwelle (300) drehbar mit dem Brückenelement (610) verbunden ist, und das Push-Pull-Element (220), das Brückenelement (610), und die Schiebeanordnung alle in Bezug aufeinander in axialer Richtung fixiert sind.

11. Faltbare Stützvorrichtung nach Anspruch 10, wobei das Brückenelement (610) mit einem bogenförmigen Durchgangsloch (611) versehen ist, das Brückenelement (610) in der axialen Richtung durch ein Verbindungselement (620), das durch das bogenförmige Durchgangsloch (611) verläuft, in Bezug aufeinander an der Schiebeanordnung fixiert ist, und das Verbindungselement (620) entlang des bogenförmigen Durchgangslochs (611) mit der Drehung der Schiebeanordnung bewegbar ist.

12. Elektronische Vorrichtung, umfassend einen flexiblen Bildschirm (900) und die faltbare Stützvorrichtung nach einem der Ansprüche 1 bis 11, wobei zwei gegenüberliegende Enden des flexiblen Bildschirms (900) beide an der faltbaren Stützvorrichtung fixiert sind.

## Revendications

1. Appareil de support pliable, comprenant une base de montage (100), un arbre rotatif (300), un ensemble télescopique (200), un ensemble de poussée et une base (710), dans lequel la base de montage (100) est reliée de manière rotative à l'arbre rotatif (300), et la base de montage (100) et l'arbre rotatif (300) sont relativement fixes dans une direction axiale de l'arbre rotatif (300); et l'ensemble de poussée et l'arbre rotatif (300) sont relativement fixes dans une direction circonférentielle de l'arbre rotatif (300), et l'ensemble de poussée et l'arbre rotatif (300) sont appariés de manière mobile dans la direction axiale ;
l'ensemble télescopique (200) est agencé entre la base de montage (100) et l'ensemble de poussée dans la direction axiale de l'arbre rotatif (300), l'ensemble télescopique (200) comprend un élément rotatif (210) et un élément de poussée-traction (220), et l'élément rotatif (210) est en liaison de transmission avec l'arbre rotatif (300) ; dans la direction axiale de l'arbre rotatif (300), l'un de l'élément rotatif (210) et de l'élément de poussée-traction (220) est relativement fixe par rapport à la base de montage (100), et l'autre est relativement fixe par rapport à l'ensemble de poussée ; et l'un de l'élément rotatif (210) et de l'élément de poussée-traction (220) est pourvu d'une rainure de coulissement (211), et l'autre est pourvu d'un coulisseau (230), dans lequel le coulisseau (230) passe d'une première position à une seconde position le long de la rainure de coulissement (211) de manière alternative, pour modifier une distance entre la base de montage (100) et l'ensemble de poussée dans la direction axiale ; et
la base (710) est configurée pour supporter un écran d'affichage, la base (710) est reliée à une extrémité de l'ensemble de poussée orientée à l'opposé de l'arbre rotatif (300), et l'ensemble de poussée est pourvu d'une première surface de poussée inclinée (511a), dans lequel la première surface de poussée inclinée (511a) est configurée pour modifier une distance entre la base (710) et l'arbre rotatif (300) dans une direction radiale de l'arbre rotatif (300) de manière alternative dans un cas où l'ensemble de poussée effectue un mouvement de va-et-vient dans la direction axiale de l'arbre rotatif (300).

2. Appareil de support pliable selon la revendication 1, dans lequel l'ensemble de poussée comprend une partie coulissante (510) et une partie d'entraînement (520), la partie coulissante (510) est reliée de manière mobile à la partie d'entraînement (520), et la partie coulissante (510) et l'arbre rotatif (300) sont relativement fixes dans la direction circonférentielle et appariés de manière mobile dans la direction axiale ; et la première surface de poussée inclinée (511a) est fournie sur la partie coulissante (510), la partie d'entraînement (520) est pourvue d'une seconde surface de poussée inclinée (521a), la seconde surface de poussée inclinée (521a) est appariée de manière coulissante à la première surface de poussée inclinée (511a), et une extrémité de la partie d'entraînement (520) orientée à l'opposé de l'arbre rotatif (300) est reliée de manière fixe à la base (710).

3. Appareil de support pliable selon la revendication 2, dans lequel l'une de la partie coulissante (510) et de la partie d'entraînement (520) est pourvue d'une rainure de logement (511), l'autre comprend un bloc d'insertion (521), le bloc d'insertion (521) est inséré dans la rainure de logement (511), le bloc d'insertion (521) et la rainure de logement (511) sont relativement fixes dans une direction de support de la base (710), l'une de la première surface de poussée inclinée (511a) et de la seconde surface de poussée inclinée (521a) est prévue au fond de la rainure de logement (511), et l'autre est prévue à une extrémité du bloc d'insertion (521) orientée dans la direction opposée à la base (710).

4. Appareil de support pliable selon la revendication 3, dans lequel la partie coulissante (510) est pourvue d'une rainure de logement (511) et d'une rainure de limitation (512), la partie d'entraînement (520) comprend le bloc d'insertion (521) et un bloc de limitation (522), le bloc de limitation (522) est inséré dans la rainure de limitation (512) dans la direction radiale de l'arbre rotatif (300), la rainure de limitation (512) et la rainure de logement (511) sont réparties dans la direction de support de la base (710), et le bloc de limitation (522) et la rainure de limitation (512) sont relativement fixes dans la direction de support de la base (710).

5. Appareil de support pliable selon la revendication 2, dans lequel l'ensemble de poussée comprend en outre une partie de guidage (530), la base (710) est pourvue d'une cavité mobile, la partie de guidage (530) est reliée de manière fixe à un côté de la partie coulissante (510) orienté vers la base (710), la partie de guidage (530) s'étend dans la cavité mobile, et la partie de guidage (530) et la cavité mobile sont appariées de manière mobile dans une direction perpendiculaire à une direction de support de la base (710) et à la direction axiale de l'arbre rotatif (300).

6. Appareil de support pliable selon la revendication 1, comprenant en outre un élément de synchronisation (410) et un ensemble de connexion mobile, dans lequel l'élément de synchronisation (410) est relié de manière fixe à l'arbre rotatif (300), et l'élément de synchronisation (410) est apparié de manière mobile à la base (710) dans la direction radiale de l'arbre rotatif (300) par l'intermédiaire de l'ensemble de connexion mobile ; et il existe une pluralité de bases (710), les éléments de synchronisation (410) sont agencés pour deux bases (710) adjacentes en correspondance biunivoque, et les deux éléments de synchronisation (410) agencés de manière correspondante sont en connexion de transmission.

7. Appareil de support pliable selon la revendication 6, dans lequel l'ensemble de connexion mobile comprend un bloc en queue d'aronde (430) et une rainure en queue d'aronde qui sont appariés l'un à l'autre de manière coulissante, l'un du bloc en queue d'aronde (430) et de la rainure en queue d'aronde est disposé sur un côté de l'élément de synchronisation (410) faisant face à la base (710), et l'autre est disposé sur un côté de la base (710) faisant face à l'élément de synchronisation (410).

8. Appareil de support pliable selon la revendication 1, dans lequel l'élément de poussée-traction (220) est manchonné à l'extérieur de l'élément rotatif (210), l'élément de poussée-traction (220) est pourvu d'un trou de passage, une extrémité du coulisseau (230) passe à travers le trou de passage pour s'étendre dans la rainure de coulissement (211), et le coulisseau (230) est relié de manière fixe et amovible à l'élément de poussée-traction (220).

9. Appareil de support pliable selon la revendication 1, dans lequel il existe une pluralité de rainures de coulissement (211) et une pluralité de coulisseaux (230), la pluralité de coulisseaux (230) sont adaptés à la pluralité de rainures de coulissement (211) en correspondance biunivoque, et la pluralité de coulisseaux (230) sont espacés l'un de l'autre dans une direction circonférentielle de l'élément rotatif (210).

10. Appareil de support pliable selon la revendication 1, comprenant en outre un élément de pont (610), dans lequel l'élément de pont (610) est manchonné sur l'arbre rotatif (300), l'arbre rotatif (300) est apparié de manière rotative avec l'élément de pont (610), et l'élément de poussée-traction (220), l'élément de pont (610), et l'ensemble de poussée sont tous relativement fixes dans la direction axiale.

11. Appareil de support pliable selon la revendication 10, dans lequel l'élément de pont (610) est pourvu d'un trou de passage en forme d'arc (611), l'élément de pont (610) est relativement fixe par rapport à l'ensemble de poussée dans la direction axiale par l'intermédiaire d'un élément de liaison (620) passant par le trou de passage en forme d'arc (611), et l'élément de liaison (620) est mobile le long du trou de passage en forme d'arc (611) avec la rotation de l'ensemble de poussée.

12. Dispositif électronique comprenant un écran souple (900) et l'appareil de support pliable selon l'une quelconque des revendications 1 à 11, dans lequel deux extrémités opposées de l'écran souple (900) sont toutes deux fixées à l'appareil de support pliable.
